# EUROPEAN PATENT SPECIFICATION

(11) **EP 4 260 699 B1**
(45) Date of publication and mention of the grant of the patent: **29.01.2025**
(21) Application number: 23155208.4
(22) Date of filing: 06.02.2023
(51) Int. Cl.: A01K 89/01

(54) **FISHING REEL**
ANGELROLLE
MOULINET DE PÊCHE

(30) Priority: 31.03.2022 JP 2022057882
(43) Date of publication of application: 18.10.2023
(73) Proprietor: Globeride, Inc., Higashikurume-shi Tokyo 203-8511 (JP)
(72) Inventor: TSUSHIMA, Daisuke, Tokyo, 203-8511 (JP); HORIE, Hironori, Tokyo, 203-8511 (JP)
(74) Representative: Boult Wade Tennant LLP

(56) References cited:
- JP-A- 2016 101 104
- JP-B2- 6 653 359
- US-B1- 6 457 662
- US-B2- 10 021 864

## Description

### BACKGROUND OF THE INVENTION

### 1. TECHNICAL FIELD

The present invention relates to a fishing reel including a magnetic seal mechanism that waterproofs and dustproofs a one-way clutch provided on a drive shaft.

### 2. DESCRIPTION OF THE RELATED ART

Generally, a spinning reel, which is a fishing reel, incorporates a reverse rotation prevention mechanism that allows rotation of a rotor in a fishing line winding direction by a rotation operation of a handle and prevents reverse rotation of the rotor when the handle is to be reversely rotated. Normally, as disclosed in JP 2012-23965 A, for example, the reverse rotation prevention mechanism is constituted by a one-way clutch (bearing member) including an inner ring fitted into a pinion gear to prevent rotation, a holder disposed radially outside the inner ring and holding a plurality of rolling members, and an outer ring disposed radially outside the holder and fixed to a reel body to prevent rotation.

Further, JP 2012-23965 A discloses a structure in which a magnetic seal mechanism is disposed on the opening side of the one-way clutch to achieve waterproof and dustproof functions. The magnetic seal mechanism has a structure in which a ring-shaped electrode plate to which a magnet is attached is disposed on an outer surface of the inner ring (drive shaft) of the one-way clutch with a gap therebetween, and the gap is filled with a magnetic fluid to prevent a foreign material such as moisture and dust from entering the one-way clutch.

In the magnetic seal mechanism described above, for example, a possibility that the magnetic fluid held in the gap enters the side of the one-way clutch due to a strong impact or vibration generated at the time of dropping, moving, transporting, or the like of the reel cannot be excluded. Therefore, JP 2012-23965 A discloses that a groove is formed in the drive shaft between the magnetic fluid and the one-way clutch so that the magnetic fluid and the grease of the one-way clutch are not mixed.

### RELEVANT REFERENCES

### LIST OF RELEVANT PATENT LITERATURE

Patent Literature 1: Japanese Application Publication No. 2012-23965

### SUMMARY OF THE INVENTION

However, there is a possibility that it is not possible to completely prevent the magnetic fluid from entering the side of the one-way clutch when a strong impact or vibration acts on the reel body only by forming the groove in the inner ring. In this case, it is conceivable to form the groove deep, but the strength of the inner ring may be lowered. Further, JP 2012-23965 A discloses that a step is formed on the inner ring and a groove is formed by using the step. However, even in such a configuration, the strength of the inner ring cannot be sufficiently secured, and after an electrode plate portion of the magnetic seal mechanism is incorporated, the inner ring cannot be incorporated, and the incorporation is deteriorated.

The present invention has been made in view of the above problems, and an object thereof is to provide a structure for more reliably preventing a magnetic fluid of a magnetic seal mechanism from entering a one-way clutch located in the vicinity of the magnetic seal mechanism even when a strong impact or vibration is applied, in a fishing reel incorporating the magnetic seal mechanism.

In order to achieve the above object, a fishing reel according to the present invention has a drive shaft that is rotationally driven by a rotation operation of a handle rotatably supported on a reel body, a one-way clutch having an inner ring that is prevented from rotating with respect to the drive shaft and is rotatable integrally with the drive shaft, an outer ring that is fixed to the reel body to be prevented from rotating, and a holder that is disposed between the inner ring and the outer ring and holds a plurality of rolling members, and a magnetic seal mechanism that forms a seal film made of a magnetic fluid in a gap between the magnetic seal mechanism and an outer surface of the inner ring and prevents entry of a foreign material into the one-way clutch. The inner ring is provided with a circumferential groove that prevents the magnetic fluid from entering the one-way clutch, and an O-ring is attached to the circumferential groove.

In the fishing reel having the above configuration, by forming the circumferential groove in the inner ring, even if a large impact or vibration is applied to the reel body, the magnetic fluid of the magnetic seal mechanism is prevented from entering the side of the one-way clutch. In this case, by attaching the O-ring to the circumferential groove, it is possible to increase a surface area contacting the flowing magnetic fluid, the magnetic fluid easily clings to the corresponding portion, and it is possible to effectively prevent the magnetic fluid from entering the side of the one-way clutch.

A fishing reel according to the present invention has a drive shaft that is rotationally driven by a rotation operation of a handle rotatably supported on a reel body, a one-way clutch having an inner ring that is prevented from rotating with respect to the drive shaft and is rotatable integrally with the drive shaft, an outer ring that is fixed to the reel body to be prevented from rotating, and a holder that is disposed between the inner ring and the outer ring and holds a plurality of rolling members, and a magnetic seal mechanism that forms a seal film made of a magnetic fluid in a gap between the magnetic seal mechanism and an outer surface of the inner ring and prevents entry of a foreign material into the one-way clutch. The inner ring is provided with a circumferential groove that prevents the magnetic fluid from entering the one-way clutch, and an inner surface of the circumferential groove is provided with irregularities.

As described above, by forming the irregularities on the inner surface of the circumferential groove, it is possible to increase a surface area contacting the flowing magnetic fluid, the magnetic fluid easily clings to the corresponding portion, and it is possible to effectively prevent the magnetic fluid from entering the side of the one-way clutch. In this case, the irregularities can be formed on an inner wall and/or a bottom portion of the circumferential groove, and for example, the irregularities can be formed by embossing or various roughening treatments.

According to the present invention, it is possible to obtain a structure for preventing a magnetic fluid of a magnetic seal mechanism from entering a one-way clutch located in the vicinity of the magnetic seal mechanism even when a strong impact or vibration is applied, in a fishing reel incorporating the magnetic seal mechanism.

### BRIEF DESCRIPTION OF THE DRAWINGS

FIG. 1 is an exploded perspective view illustrating an embodiment of a fishing reel (spinning reel) according to the present invention;
FIG. 2 is an axial cross-sectional view of a main portion of the fishing reel illustrated in FIG. 1;
FIG. 3 is a cross-sectional view taken along the line A-A of FIG. 2;
FIG. 4 is a perspective view illustrating a fixed state of a one-way clutch;
FIG. 5 is a perspective view illustrating a state in which an anticorrosion plate is disposed in the one-way clutch illustrated in FIG. 4;
FIG. 6 is an enlarged view of the main portion (A1 portion) in FIG. 2; and
FIGS. 7A to 7C are diagrams illustrating various modifications of a circumferential groove formed in an inner ring.

### DETAILED DESCRIPTION

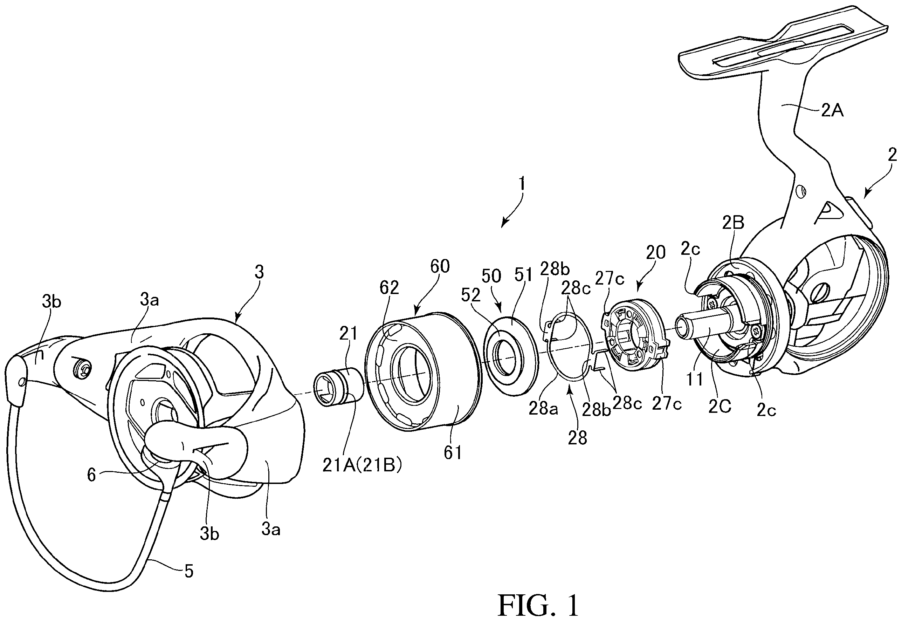

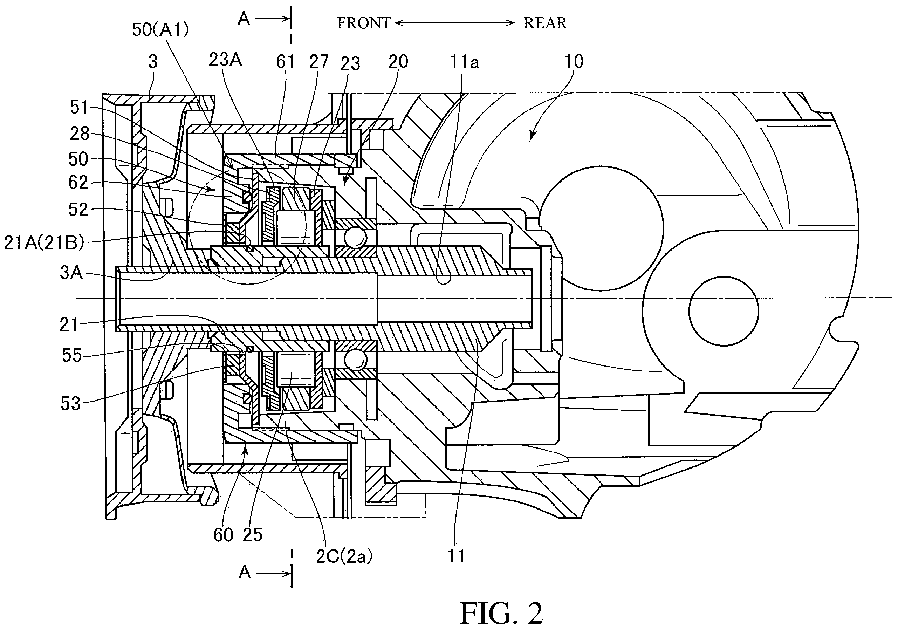

FIGS. 1 and 2 are diagrams illustrating a first embodiment of a fishing reel according to the present invention (in the present embodiment, a spinning reel is illustrated as the fishing reel). First, an outline of an overall configuration of the spinning reel of the present embodiment will be described. Note that, in the following description, "front and rear" mean directions illustrated in FIG. 2.

A reel leg 2A to be mounted on a fishing rod is formed integrally with a reel body 2 of a spinning reel (hereinafter, referred to as the reel) 1. A rotor 3 that is rotatably supported and a spool (not illustrated in the drawings) that is supported to be movable back and forth in synchronization with the rotational motion of the rotor 3 are disposed in front of the reel body 2.

The rotor 3 comprises a pair of arm portions 3a that rotates around the spool, and a bail support member 3b to which a base end of a bail 5 is attached is rotatably supported at a front end of each arm portion 3a between a fishing line winding position and a fishing line releasing position. In this case, one base end of the bail 5 is attached to a fishing line guide portion (line roller) 6 provided integrally with the bail support member 3b.

In the reel body 2, a handle shaft is rotatably supported via a bearing, and a handle is attached to a protrusion end of the handle shaft. The handle shaft is provided with a driving force transmission mechanism 10 that transmits a driving force to the rotor 3 to rotationally drive the rotor when the handle is rotationally operated.

As known, the driving force transmission mechanism 10 comprises a drive gear integrally rotatably mounted on the handle shaft, and a pinion 11 comprising a pinion tooth portion meshing with the drive gear. The pinion 11 extends in a front-rear direction orthogonal to the handle shaft, and has a function as a rotation drive unit (drive shaft) in which a cavity 11 a extending in an axial direction is formed. In this case, a spool shaft that engages with a known oscillating mechanism moving the spool back and forth when the handle is rotationally operated is inserted through the cavity 11a, and the spool is mounted on a distal end thereof.

The pinion 11 is rotatably supported by the reel body 1. Further, the pinion 11 extends toward the spool side, and the rotor 3 is integrally rotatably attached to a distal end of the pinion 11. The rotor 3 is fixed by externally fitting a through-hole of a boss portion 3A formed at a center portion into the distal end of the pinion 11 and tightening a nut (not illustrated in the drawings). A one-way clutch 20 constituting a reverse rotation prevention device is disposed on the pinion 11.

With the above configuration, when the handle is wound, the rotor 3 is rotationally driven via the driving force transmission mechanism 10, and the spool is reciprocated in the front-rear direction via the oscillating mechanism and the spool shaft. Therefore, the fishing line is evenly wound around the spool via the fishing line guide portion 6 of the rotationally driven rotor 3.

Next, the one-way clutch 20 of the present embodiment will be described with reference to FIGS. 1 to 5.

As illustrated in FIG. 1, a base portion 2B formed in a substantially disk shape is disposed on the spool side of the reel body 2, and a cylindrical portion 2C is formed on a surface portion of the base portion 2B in the axial direction. The pinion 11 is rotatably supported through a center portion of the cylindrical portion 2C, and the one-way clutch 20 is disposed in an intermediate portion thereof.

The pinion 11 is rotationally driven via the drive gear by the rotation operation of the handle, and the one-way clutch 20 is disposed in the intermediate portion of the pinion 11 to allow rotation of the pinion 11 in the fishing line winding direction and prevent reverse rotation.

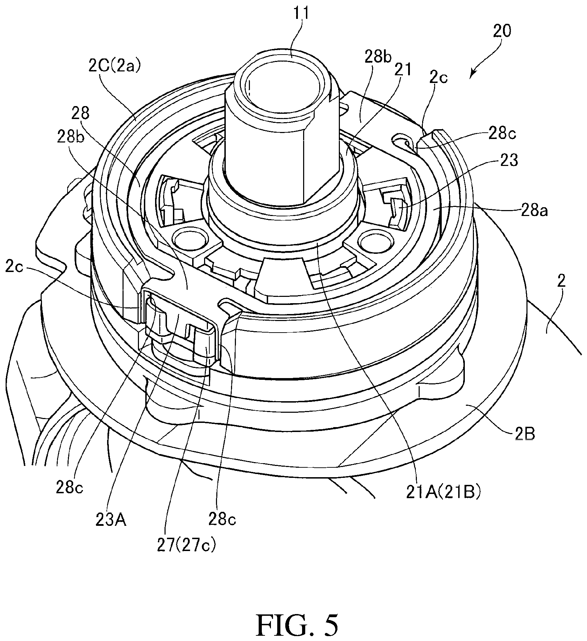

The one-way clutch 20 has an inner ring 21, an outer ring 27, and a holder 23 holding a plurality of rolling members 25, and further has a cover member 23A (see FIG. 5) integrated with the holder 23. These elements (or some elements) can be unitized in advance.

The inner ring 21 is prevented from rotating with respect to the pinion 11, and has a function as a drive shaft that rotates integrally with the pinion 11. Specifically, a cross section of the pinion 11 has a shape in which a non-circular portion is partially formed, and the inner ring 21 rotates integrally with the pinion 11 by fitting the non-circular portion of the inner ring 21 into this portion. In addition, the inner ring 21 has a predetermined length in the axial direction, and is formed in a cylindrical shape having the same diameter and the same thickness over the axial direction in the present embodiment.

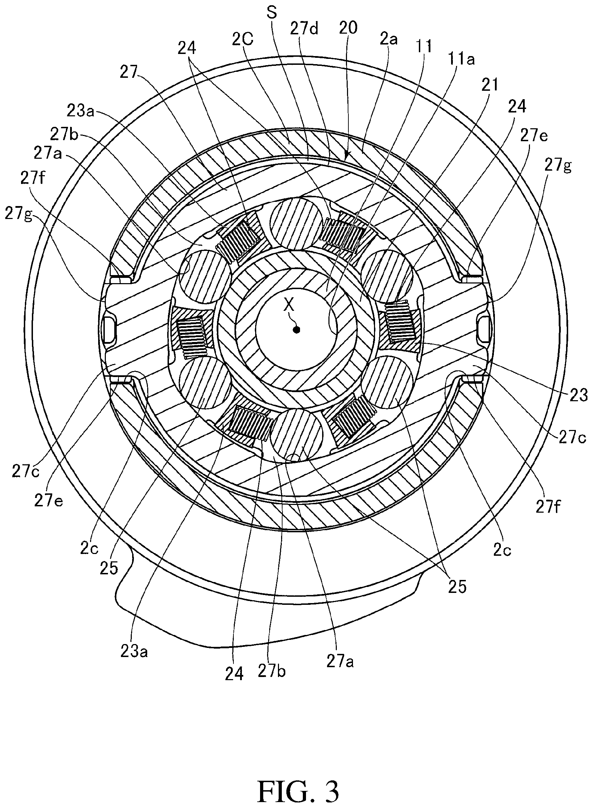

The holder 23 is disposed radially outside the inner ring 21 and comprises holding portions 23a disposed at regular intervals in a circumferential direction. A biasing spring 24 is disposed in each of the holding portions 23a to bias the rolling members 25 disposed between the holding portions in the circumferential direction (in FIG. 3, a counterclockwise direction; a reverse rotation direction).

The outer ring 27 is disposed radially outside the holder 23 and is formed in a substantially ring shape. On an inner peripheral surface of the outer ring 27, a wedge region 27a for blocking the rotation of each rolling member 25 and a free region 27b for freely rotating the rolling member 25 are formed. Each rolling member 25 held by the holder 23 is constantly biased to the side of the wedge region by the biasing spring 24. In addition, an outer peripheral surface 27d of the outer ring 27 of the present embodiment is formed in a circular shape except for a portion where the following stopper 27c is formed.

A protrusion piece 27c is provided in a part of the outer ring 27 so as to protrude radially outward. The protrusion piece has a function as a stopper that restricts the rotation of the outer ring 27 (hereinafter, referred to as the stopper 27c). The stopper 27c is integrally formed so as to protrude radially outward from the outer peripheral surface 27d of the outer ring 27, and is provided at one or more places. In this case, there is a possibility that a large torque is applied to the outer ring, and stress concentrates at one place to cause a deviation or the like. Therefore, it is preferable to form two or more stoppers at equal intervals. In the present embodiment, two stoppers are provided so as to face each other with a center axis X therebetween at 180° intervals. The stopper 27c has a constant width in the circumferential direction, and both sides 27e and 27f in the circumferential direction have a rotation stopping function.

The cylindrical portion 2C protruding from the reel body 2 is provided with a notch portion 2c penetrating a circumferential wall 2a in the radial direction. The notch portion 2c is formed to such an extent that the stopper 27c of the outer ring 27 can be fitted. The stopper 27c is fitted into the notch portion 2c, and an exposed surface 27g is disposed so as to be exposed in the radial direction, so that the outer ring 27 is fixed to prevent the rotation (the rotation is restricted).

One or more notch portions 2c may be formed in the circumferential wall 2a. However, in the present embodiment, two notch portions 2c are formed at equal intervals in the circumferential direction (two notch portions symmetrical with respect to the center axis X at 180° intervals). That is, the same number of notch portions as the number of stoppers of the outer ring may be provided.

An outer surface of the stopper 27c is exposed in the radial direction at the notch portion 2c of the cylindrical portion 2C, and can be pinched with a finger. For this reason, the outer ring 27 is easily pinched by the stopper, and the attachment/detachment workability of the one-way clutch 20 can be improved.

In the above configuration, a diameter of the circumferential wall 2a of the cylindrical portion 2C (a diameter of the outer circumferential surface of the circumferential wall) and an outermost diameter of the outer ring 27 (a diameter of the exposed surface 27g of the stopper 27c) are the same. In this case, the outer ring 27 is configured to be fitted into the circumferential wall 2a to generate a gap therebetween, so that a backlash can be prevented while rotational performance is secured, and miniaturization in the radial direction can be achieved. In addition, the attachment/detachment operation can be easily performed by providing a slight gap.

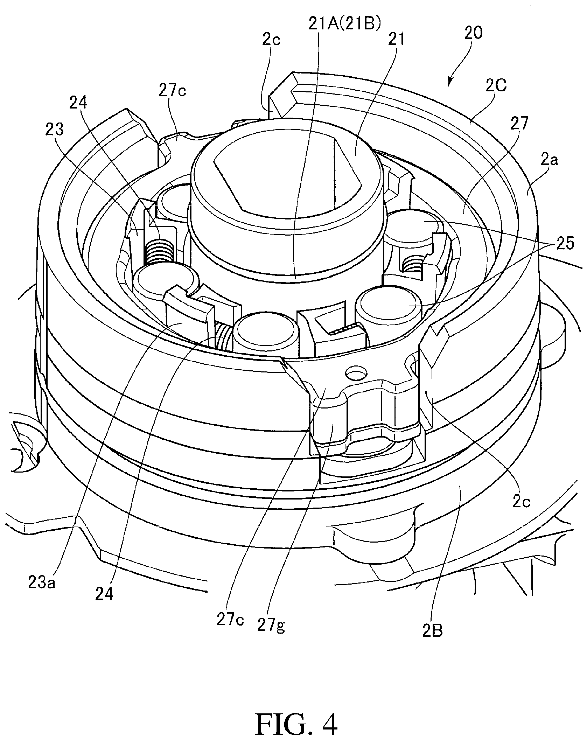

The one-way clutch 20 configured as described above is unitized and incorporated in the cylindrical portion 2C. In this case, as illustrated in FIG. 5, a lid (cover member) 23A that covers the holder 23 and the outer ring 27 is mounted on the surface portion of the outer ring 27 illustrated in FIG. 4, and the outer ring 27 is sandwiched between the holder 23 and the cover member 23A. An electrolytic corrosion prevention plate (anticorrosion plate) 28 or the like may be mounted on the lid 23.

As illustrated in FIG. 1, the anticorrosion plate 28 comprises a ring-shaped main body 28a, and comprises a pair of leg portions 28c so as to sandwich the stopper 27c. That is, since the leg portion 28c is interposed between the stopper 27c and the notch portion 2c, it is possible to suppress a current from flowing between both members and to prevent corrosion of the reel body. A restriction plate may be disposed adjacent to the one-way clutch 20 so as to restrict the axial movement of the one-way clutch 20.

According to the one-way clutch 20 having the above-described configuration, rotation (reverse rotation) of the handle (rotor 3) in a fishing line feeding direction is prevented.

That is, when the pinion 11 is rotationally driven by rotationally operating the handle in a fishing line winding direction (rotationally driven in the clockwise direction in FIG. 3), the inner ring 21 rotates in the same direction together with the pinion 11. At this time, since the rolling member 25 held by the holder 23 moves to the free region 27b of the outer ring 27, the rotational force of the inner ring 21 is not transmitted to the outer ring 27, and the rotor 3 can rotate together with the pinion 11 without any problem.

On the other hand, when the inner ring 21 tries to rotate in the reverse direction (the rotor 3 rotates in the fishing line feeding direction) together with the pinion 11, the rolling member 25 held by the holder 23 rolls in the counterclockwise direction and is located in the wedge region 27a of the outer ring 27 by the biasing spring 24, so that the rotational force of the inner ring 21 is transmitted to the outer ring 27. Since the rotation of the outer ring 27 is restricted by the stopper 27c, reverse rotation of the pinion 11 and the rotor 3 is prevented.

In the above configuration, the circumferential wall 2a of the cylindrical portion 2C on the side of the reel body is provided with the notch portion 2c penetrating the circumferential wall 2a in the radial direction, and the stopper 27c formed in the outer ring 27 of the one-way clutch 20 is disposed in the notch portion so as to be exposed in the radial direction, so that the outer ring 27 is fixed to be prevented from rotating.

That is, since the outer ring 27 is not fixed by grooves, projections, or the like formed on the inner peripheral surface of the cylindrical portion unlike a conventional case, it is possible to reduce the diameter of the cylindrical portion 2C as much as possible and reduce the thickness of the cylindrical portion 2C, and it is possible to reduce the size and weight of the reel body.

In the one-way clutch 20, a magnetic seal mechanism 50 is disposed adjacent to the one-way clutch 20 so as to enhance waterproof and dustproof effects. Hereinafter, a configuration of the magnetic seal mechanism 50 will be described with reference to FIGS. 1, 2, and 6.

As known, the magnetic seal mechanism 50 comprises ring-shaped electrode plates (magnetic plates) 51 and 52 disposed with a minute gap between the electrode plates and the outer peripheral surface of the drive shaft (inner ring 21), and a ring-shaped magnet 53 sandwiched between the magnetic plates, and has a configuration in which a seal film is formed by filling a gap G between the drive shaft and the electrode plates with a magnetic fluid 55.

The electrode plate 51 is formed in a ring shape in which an opening through which the inner ring 21 prevented from rotating with respect to the pinion 11 is inserted is formed at the center. Similarly, the electrode plate 52 is formed in a ring shape in which an opening through which the inner ring 21 is inserted is formed, and is formed to have a smaller diameter than the electrode plate 51. The ring-shaped magnet 53 is bonded and fixed to the electrode plates 51 and 52 in a state of being sandwiched therebetween.

The electrode plates 51 and 52 and the magnet 53 may be unitized as a magnet assy, may be fixed to the cylindrical portion 2C of the reel body, or may be incorporated in a waterproof cap 60 described later.

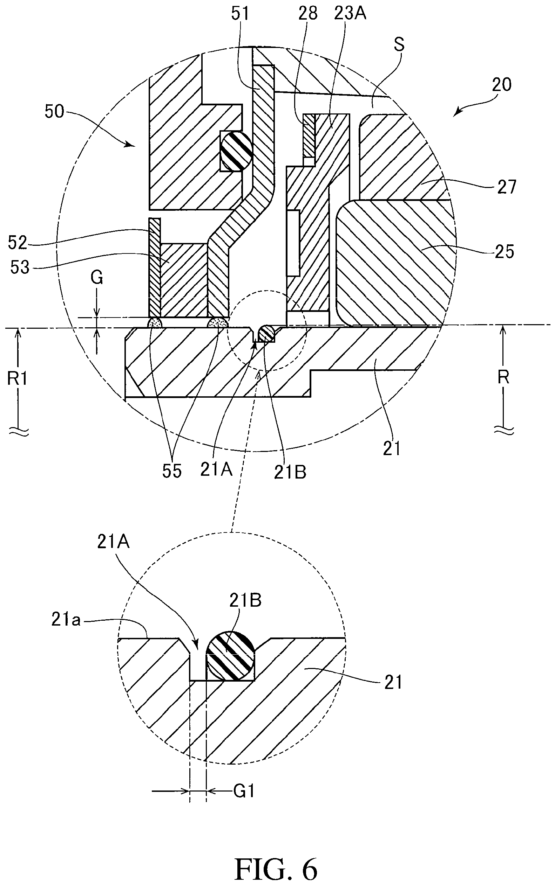

In addition, the inner ring 21 is provided with a circumferential groove 21A that prevents the magnetic fluid 55 from entering the magnetic seal mechanism 20. The circumferential groove 21A may be formed in a region where the one-way clutch 20 is disposed, for example, in the same plane as the outer ring 27 and the holder (cover member 23A) which are ends of the one-way clutch. However, as illustrated in FIG. 6, the circumferential groove is preferably formed between the electrode plate 51 of the portion of the magnetic seal mechanism 50 where the magnetic fluid is held and the one-way clutch 20.

As described above, the circumferential groove 21A is formed in the inner ring 21. Therefore, even if a large impact or vibration is applied to the reel body and the magnetic fluid 55 enters the side of the one-way clutch 20, the movement is restricted by the circumferential groove 21A (the magnetic fluid is held in the circumferential groove), and the magnetic fluid can be prevented from entering the side of the one-way clutch.

Further, an O-ring 21B formed of rubber or the like is attached to the circumferential groove 21A.

The O-ring 21B is provided to increase a surface area contacting the magnetic fluid 55 flowing out of the magnetic seal mechanism 50, and as described above, the circumferential groove 21A is formed between the electrode plate 51 and the one-way clutch 20, so that the O-ring 21B can be easily mounted. In addition, by attaching the O-ring 21B in the circumferential groove 21A, the surface area increases, the magnetic fluid 55 easily clings to the portion having the increased surface area, and it is possible to more effectively prevent the magnetic fluid 55 from entering the side of the one-way clutch 20. Furthermore, by attaching the O-ring 21B, it is not necessary to form the circumferential groove deep, and it is possible to prevent the strength of the inner ring 21 from being lowered.

As illustrated in FIG. 6, when the O-ring 21B is attached to the circumferential groove 21A, the O-ring is preferably formed to have a size in which an outermost diameter R is equal to or larger than an outer diameter R1 of the inner ring 21 and is in a range in the gap G. That is, it is preferable to use the O-ring 21B which protrudes from the outer peripheral surface 21a of the inner ring 21 and does not become higher than the opening end edges of the electrode plates 51 and 53 beyond the gap G.

According to such a configuration, the O-ring 21B serves as a wall, and the magnetic fluid 55 is less likely to move to the side of the one-way clutch. Further, in the assembly of the above-described components, since the one-way clutch 20 and the magnetic seal mechanism 50 are assembled to the pinion 11 and the inner ring 21 is fitted into the pinion 11, the inner ring 21 to which the O-ring 21B is attached can pass through the openings of the electrode plates 51 and 53 of the magnetic seal mechanism 50. Therefore, the assembly can be easily performed, and the electrode plate can be prevented from being damaged.

Further, the circumferential groove 21A is preferably formed to have a size in which a gap G1 (clearance) is generated, in the axial direction, between the circumferential groove and the attached O-ring 21B.

As described above, by generating the slight gap G1 in the axial direction between the circumferential groove 21A and the O-ring 21B, the surface area further increases, a holding amount of the flowing magnetic fluid 55 increases, and the magnetic fluid hitting the O-ring 21B can be easily held in the circumferential groove 21A.

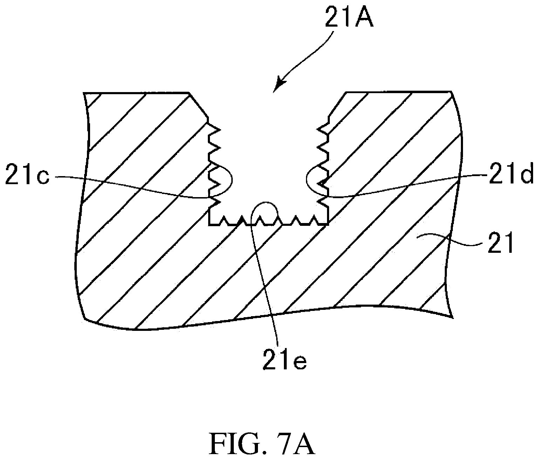

Note that the O-ring 21B can be omitted, for example, when irregularities illustrated in FIGS. 7A to 7C are formed on the inner surface of the circumferential groove 21A.

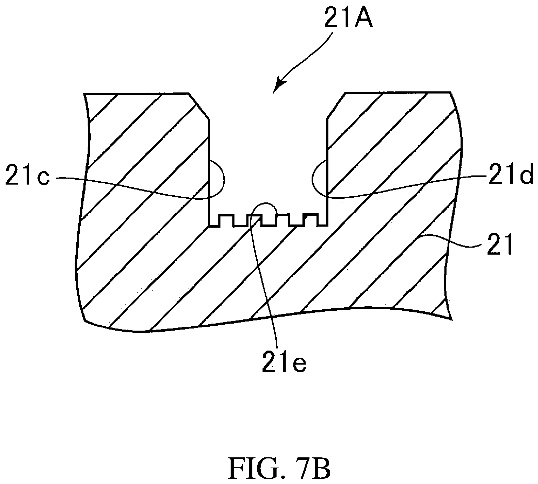

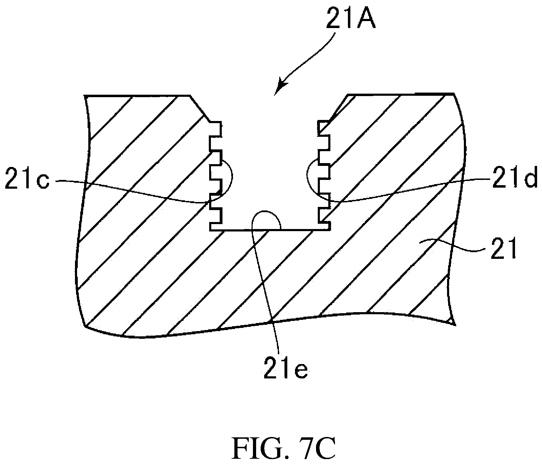

FIG. 7A illustrates an example in which roughened irregularities are formed on the entire inner surface (inner walls 21c and 21d and a bottom portion 21e) of the circumferential groove 21A. FIG. 7B illustrates an example in which irregularities (for example, streaky irregularities) are formed on the bottom portion 21e of the circumferential groove 21A. FIG. 7C illustrates an example in which irregularities are formed on the inner surface (inner walls 21c and 21d) of the circumferential groove 21A.

A method for forming the irregularities is not particularly limited, and for example, the irregularities can be formed by cutting or the like. By forming the irregularities on the inner surface of the circumferential groove 21A as described above, the surface area contacting the flowing magnetic fluid 55 increases, the magnetic fluid easily clings to the irregularities, and it is possible to effectively prevent the magnetic fluid from entering the side of the one-way clutch. Note that the O-ring 21B described above may be attached to the circumferential groove 21A provided with the irregularities, and as a result, it is possible to further increase the surface area which the magnetic fluid contacts.

In the above embodiment, as illustrated in FIG. 1, a waterproof cap 60 may be provided on the reel body so as to wrap the cylindrical portion 2C and the one-way clutch 20. The waterproof cap 60 has a shape including a cylindrical portion 61 surrounding the one-way clutch 20 and a cover portion 62 closing the opening of the spool side, and the magnetic plate 51 of the magnetic seal mechanism 50 may be fixed to an inner surface of the cover portion 62.

As described above, the magnetic seal mechanism 50 is disposed on the spool side of the one-way clutch 20, and the waterproof cap 60 is provided so as to wrap the cylindrical portion 2C and the one-way clutch 20, so that it is possible to reliably prevent entry of a foreign material such as moisture and dust into the one-way clutch 20 and to enhance durability.

The embodiment according to the present invention has been described above. The present invention is not limited to the embodiment described above, and various modifications can be made.

According to the present invention, the circumferential groove is formed on the outer peripheral surface of the drive shaft between the magnetic seal mechanism 50 and the one-way clutch (bearing member) 20, and the O-ring is disposed in the circumferential groove or the irregularities are formed in the circumferential groove. Therefore, the configurations of the one-way clutch 20 and the magnetic seal mechanism 50 are not particularly limited. The above-described configurations can also be used for various bearing members, for example, rolling type bearings, in addition to the one-way clutch, and can also be applied to various fishing reels (double-bearing reels and the like) other than the spinning reel.

### Reference Signs List

- 1: fishing reel
- 2: reel body
- 2C: cylindrical portion
- 2c: notch portion
- 3: rotor
- 20: one-way clutch
- 21: inner reel (drive shaft)
- 21A: circumferential groove
- 21B: O-ring
- 50: magnetic seal mechanism
- 55: magnetic fluid

## Claims

1. A fishing reel comprising:
a drive shaft that is rotationally driven by a rotation operation of a handle rotatably supported on a reel body;
a one-way clutch having an inner ring that is prevented from rotating with respect to the drive shaft and is rotatable integrally with the drive shaft, an outer ring that is fixed to the reel body to be prevented from rotating, and a holder that is disposed between the inner ring and the outer ring and holds a plurality of rolling members; and
a magnetic seal mechanism that forms a seal film made of a magnetic fluid in a gap between the magnetic seal mechanism and an outer surface of the inner ring and prevents entry of a foreign material into the one-way clutch,
wherein the inner ring is provided with a circumferential groove that prevents the magnetic fluid from entering the one-way clutch,
said fishing reel being **characterized in that** an O-ring is attached to the circumferential groove.

2. The fishing reel according to claim 1, wherein the circumferential groove is formed between an electrode plate for holding the magnetic fluid of the magnetic seal mechanism and the one-way clutch.

3. The fishing reel according to claim 1 or 2, wherein, when the O-ring is attached to the circumferential groove, an outermost diameter of the O-ring is equal to or larger than an outer diameter of the inner ring and is within a range of the gap.

4. The fishing reel according to any one of claims 1 to 3, wherein the circumferential groove is formed in a size in which a gap is generated, in an axial direction, between the circumferential groove and the attached O-ring.

5. The fishing reel according to claim 4, wherein an inner surface of the circumferential groove is provided with irregularities.

6. A fishing reel comprising:
a drive shaft that is rotationally driven by a rotation operation of a handle rotatably supported on a reel body;
a one-way clutch having an inner ring that is prevented from rotating with respect to the drive shaft and is rotatable integrally with the drive shaft, an outer ring that is fixed to the reel body to be prevented from rotating, and a holder that is disposed between the inner ring and the outer ring and holds a plurality of rolling members; and
a magnetic seal mechanism that forms a seal film made of a magnetic fluid in a gap between the magnetic seal mechanism and an outer surface of the inner ring and prevents entry of a foreign material into the one-way clutch,
wherein the inner ring is provided with a circumferential groove that prevents the magnetic fluid from entering the one-way clutch,
said fishing reel being **characterized in that** an inner surface of the circumferential groove is provided with irregularities.

## Patentansprüche

1. Angelrolle, umfassend:
eine Antriebswelle, welche durch eine Antriebsbetätigung eines Griffs rotatorisch angetrieben ist, welcher an einem Rollenkörper rotierbar getragen ist;
eine Einweg-Kupplung, welche einen inneren Ring, welcher daran gehindert wird, bezüglich der Antriebswelle zu rotieren, und integral mit der Antriebswelle rotierbar ist, einen äußeren Ring, welcher an dem Spulenkörper befestigt ist, um daran gehindert zu werden, zu rotieren, und einen Halter aufweist, welcher zwischen dem inneren Ring und dem äußeren Ring angeordnet ist und eine Mehrzahl von Rollelementen hält; und
einen magnetischen Dichtungsmechanismus, welcher einen Dichtungsfilm bildet, welcher aus einem magnetischen Fluid in einem Freiraum zwischen dem magnetischen Dichtungsmechanismus und einer äußeren Fläche des inneren Rings gebildet ist und ein Eindringen eines Fremdmaterials in die Einweg-Kupplung verhindert,
wobei der innere Ring mit einer umfänglichen Nut bereitgestellt ist, welche das magnetische Fluid daran hindert, in die Einweg-Kupplung einzutreten,
wobei die Angelrolle **dadurch gekennzeichnet ist, dass** ein O-Ring an der umfänglichen Nut angebracht ist.

2. Angelrolle nach Anspruch 1, wobei die umfängliche Nut zwischen einer Elektrodenplatte zum Halten des magnetischen Fluids des magnetischen Dichtungsmechanismus und der Einweg-Kupplung gebildet ist.

3. Angelrolle nach Anspruch 1 oder 2, wobei, wenn der O-Ring an der umfänglichen Nut angebracht ist, ein äußerster Durchmesser des O-Rings gleich oder größer als ein äußerer Durchmesser des inneren Rings ist und innerhalb eines Bereichs des Freiraums liegt.

4. Angelrolle nach einem der Ansprüche 1 bis 3, wobei die umfängliche Nut in einer Größe gebildet ist, in welcher ein Freiraum in einer axialen Richtung zwischen der umfänglichen Nut und dem angebrachten O-Ring erzeugt ist.

5. Angelrolle nach Anspruch 4, wobei eine innere Fläche der umfänglichen Nut mit Unregelmäßigkeiten bereitgestellt ist.

6. Angelrolle, umfassend:
eine Antriebswelle, welche durch eine Antriebsbetätigung eines Griffs rotatorisch angetrieben ist, welcher an einem Rollenkörper rotierbar getragen ist;
eine Einweg-Kupplung, welche einen inneren Ring, welcher daran gehindert wird, bezüglich der Antriebswelle zu rotieren, und integral mit der Antriebswelle rotierbar ist, einen äußeren Ring, welcher an dem Spulenkörper befestigt ist, um daran gehindert zu werden, zu rotieren, und einen Halter aufweist, welcher zwischen dem inneren Ring und dem äußeren Ring angeordnet ist und eine Mehrzahl von Rollelementen hält; und
einen magnetischen Dichtungsmechanismus, welcher einen Dichtungsfilm bildet, welcher aus einem magnetischen Fluid in einem Freiraum zwischen dem magnetischen Dichtungsmechanismus und einer äußeren Fläche des inneren Rings gebildet ist und ein Eindringen eines Fremdmaterials in die Einweg-Kupplung verhindert,
wobei der innere Ring mit einer umfänglichen Nut bereitgestellt ist, welche das magnetische Fluid daran hindert, in die Einweg-Kupplung einzutreten,
wobei die Angelrolle **dadurch gekennzeichnet ist, dass** eine innere Fläche der umfänglichen Nut mit Unregelmäßigkeiten bereitgestellt ist.

## Revendications

1. Moulinet de pêche comprenant :
un arbre d'entraînement qui est entraîné en rotation par une opération de rotation d'une poignée supportée en rotation sur un corps de moulinet ;
un embrayage unidirectionnel comportant une bague interne qui est empêchée de tourner par rapport à l'arbre d'entraînement et pouvant tourner solidairement avec l'arbre d'entraînement, une bague externe qui est fixée au corps de moulinet pour l'empêcher de tourner, et un support qui est disposé entre la bague interne et la bague externe et supporte une pluralité d'organes de roulement ; et
un mécanisme de joint magnétique qui forme un film de joint composé d'un fluide magnétique dans un entrefer entre le mécanisme de joint magnétique et une surface externe de la bague interne et empêche une entrée de matière étrangère dans l'embrayage unidirectionnel,
dans lequel la bague interne est pourvue d'une rainure circonférentielle qui empêche le fluide magnétique d'entrer dans l'embrayage unidirectionnel,
ledit moulinet de pêche étant **caractérisé en ce qu'**un joint torique est attaché à la rainure circonférentielle.

2. Moulinet de pêche selon la revendication 1, dans lequel la rainure circonférentielle est formée entre une plaque d'électrode destinée à supporter le fluide magnétique du mécanisme de joint magnétique et l'embrayage unidirectionnel.

3. Moulinet de pêche selon la revendication 1 ou 2, dans lequel, lorsque le joint torique est attaché à la rainure circonférentielle, un diamètre le plus externe du joint torique est supérieur ou égal à un diamètre externe de la bague interne et se trouve dans une portée de l'entrefer.

4. Moulinet de pêche selon l'une quelconque des revendications 1 à 3, dans lequel la rainure circonférentielle est formée dans une taille dans laquelle un entrefer est généré, dans une direction axiale, entre la rainure circonférentielle et le joint torique attaché.

5. Moulinet de pêche selon la revendication 4, dans lequel une surface interne de la rainure circonférentielle est pourvue d'irrégularités.

6. Moulinet de pêche comprenant :
un arbre d'entraînement qui est entraîné en rotation par une opération de rotation d'une poignée supportée en rotation sur un corps de moulinet ;
un embrayage unidirectionnel comportant une bague interne qui est empêchée de tourner par rapport à l'arbre d'entraînement et pouvant tourner solidairement avec l'arbre d'entraînement, une bague externe qui est fixée au corps de moulinet pour l'empêcher de tourner, et un support qui est disposé entre la bague interne et la bague externe et supporte une pluralité d'organes de roulement ; et
un mécanisme de joint magnétique qui forme un film de joint composé d'un fluide magnétique dans un entrefer entre le mécanisme de joint magnétique et une surface externe de la bague interne et empêche une entrée de matière étrangère dans l'embrayage unidirectionnel,
dans lequel la bague interne est pourvue d'une rainure circonférentielle qui empêche le fluide magnétique d'entrer dans l'embrayage unidirectionnel,
ledit moulinet de pêche étant **caractérisé en ce qu'**une surface interne de la rainure circonférentielle est pourvue d'irrégularités.
